# EUROPÄISCHE PATENTSCHRIFT

(11) **EP 1 844 969 B1**
(45) Veröffentlichungstag und Bekanntmachung des Hinweises auf die Patenterteilung: **09.06.2010**
(21) Anmeldenummer: 06007294.9
(22) Anmeldetag: 06.04.2006
(51) Int. Cl.: B60J 7/22

(54) **Windabweiser-Mechanismus für ein Fahrzeugschiebedachsystem**
Mechanism for a wind deflector for the sliding roof of a vehicle
Mécanisme pour le déflecteur de vent d'un toit coulissant de véhicule

(43) Veröffentlichungstag der Anmeldung: 17.10.2007
(73) Patentinhaber: ArvinMeritor GmbH, 63128 Dietzenbach (DE)
(72) Erfinder: Biewer, Christian, 64839 Altheim (DE); Jugl, Michael, 65843 Sulzbach (DE)
(74) Vertreter: Prinz & Partner

(56) Entgegenhaltungen:
- EP-A- 1 281 555
- DE-A1- 3 743 476
- DE-A1- 10 137 650

## Beschreibung

Die Erfindung betrifft einen Windabweiser-Mechanismus für ein Fahrzeugschiebedachsystem nach dem Oberbegriff des Anspruchs 1.

Ein Windabweiser-Mechanismus eines Fahrzeugschiebedachs hat die Funktion, die Strömungsverhältnisse dann zu verbessern, wenn ein Deckel des Schiebedachsystems sich in einer geöffneten Stellung befindet. Der Windabweiser ist üblicherweise an dem in Fahrtrichtung gesehen vorderen Rand der vom Deckel freigegebenen Dachöffnung angeordnet und wird aus einer abgesenkten Stellung, in der er sich unterhalb der Außenfläche des Fahrzeugdaches befindet, in eine ausgestellte Stellung überführt, wenn der Deckel geöffnet wird.

Aus der DE 102 10 142 ist ein Windabweiser mit einem Windabweiserelement bekannt, das als flexibles Netz oder Gewebe ausgebildet ist, wobei das Windabweiserelement zwischen zwei Halteelementen angeordnet ist. Das erste Halteelement ist fest am Fahrzeugdach angebracht, und das zweite Halteelement kann zwischen einer abgesenkten und einer ausgestellten Stellung bewegt werden. Eine Schenkelfeder dient als Scharnier zwischen den beiden Halteelementen und kann das zweite Halteelement in die ausgestellte Stellung beaufschlagen. Derartige Windabweiser können, sobald die wirkende Windkraft größer als die Vorspannung der Schenkelfeder ist, in ihrem Winkel ungewollt verstellt werden, wobei bei einer Verstellung des Windabweisers eventuell störende Windgeräusche nicht mehr verhindert werden können.

Ein anderer Mechanismus ist aus der DE-A-37 43 476 bekannt.

Der Erfindung liegt deshalb die Aufgabe zugrunde, einen Windabweiser-Mechanismus zu schaffen, mit dem es möglich ist, eine gleichbleibende, vom Fahrtwind unabhängige Ausstellhöhe ohne großen technischen Aufwand zu erreichen.

Diese Aufgabe wird durch einen Windabweiser-Mechanismus für ein Fahrzeugschiebedach gelöst, mit einem Windabweiserhebel, an dem ein Windabweiserelement angebracht ist, der an einem Fahrzeug angebracht werden kann und der schwenkbar zwischen einer Ruheposition und einer ausgestellten Position ist, einem Ausstellhebel, der mit dem Windabweiserhebel gekoppelt ist und diesen zwischen der Ruheposition und der ausgestellten Position verschwenken kann, und einer Ausstellfeder, die den Ausstellhebel so beaufschlagt, dass dieser den Windabweiserhebel im wesentlichen in Richtung der ausgestellten Position beaufschlagt, wobei der Ausstellhebel so mit dem Windabweiserhebel gekoppelt ist, dass in der ausgestellten Position eine Selbsthemmung derart eintritt, dass der Windabweiserhebel durch die vom Fahrtwind auf ihn einwirkenden Kräfte nicht in Richtung der Ruheposition verstellt werden kann. Vorteilhaft an der Erfindung ist, dass die Ausstellkraft in der ausgestellten Position von einem starren Bauteil, dem Ausstellhebel, erzeugt wird, der so angeordnet ist, dass er nicht von der Windkraft verstellt werden kann und die Windkräfte zuverlässig in die Fahrzeugkarosserie ableitet. Die Ausstellfeder dient nicht der Abstützung der Windlasten, sondern wirkt so auf den Ausstellhebel, dass dieser die ausgestellte Position beibehält, in der er vorzugsweise senkrecht zum Windabweiserhebel steht. Da keine Kräfte über die Ausstellfeder abgestützt werden, wird verhindert, dass der Windabweiserhebel sich unbeabsichtigt verstellt. Der Windabweiser-Mechanismus schafft einen funktionssicheren Windabweiser ohne großen technischen Aufwand. Die vorhandenen Windkräfte werden vom Ausstellhebel und dem Windabweiserhebel vollständig aufgenommen. Keine Komponente aus der Windkraft wirkt auf die Ausstellfeder, so daß verhindert wird, daß der Windabweiserhebel ungewollt verstellt wird.

Vorzugsweise ist das Windabweiserelement ein Netz oder ein Gewebe, wobei der Anteil des offenen Querschnitts am Gesamtquerschnitt des Windabweiserelements dazu genutzt werden kann, die Strömungsverhältnisse bei geöffnetem Deckel des Schiebdachsystems in der gewünschten Weise einzustellen.

Vorzugsweise befindet sich am Ausstellhebel ein Angriffspunkt für ein bewegliches Bauteil des Schiebedachsystems. Das bewegliche Bauteil ist Teil der Mechanik des Schließ- und Öffnungssystems des Schiebedachs, so daß zum Ausstellen bzw. Absenken des Ausstellhebels keine zusätzlichen Bauteile angeordnet werden müssen.

Gemäß einer Ausführungsform befindet sich am Ausstellhebel ein Angriffspunkt für ein bewegliches Bauteil des Schiebedachsystems, um den Windabweiserhebel in die ausgestellte Position und die Ruheposition zu beaufschlagen. Das bewegliche Bauteil, insbesondere der Deckel des Schiebedachsystems, veranlaßt das Ausstellen des Windabweiserhebels. Eine zusätzliche Schenkelfeder zum Ausstellen des Windabweiserhebels ist somit nicht notwendig.

Vorzugsweise ist die Ausstellfeder relativ zur Schwenkachse des Ausstellhebels so angeordnet, daß sie den Ausstellhebel in seiner Ruheposition hält, wenn sich der Windabweiserhebel in der Ruheposition befindet. Das Lager der Ausstellfeder ist etwas unterhalb des Schwenklagers des Ausstellhebels angeordnet und zieht diesen nach unten, so daß der Ausstellhebel in der Ruheposition gehalten werden kann. Ein Haltemechanismus, der den Ausstellhebel in der Ruheposition hält, entfällt so. Dies ändert aber nichts daran, daß die Ausstellfeder den Ausstellhebel im wesentlichen, also über den weit größten Teil seines Schwenkbereichs, in eine Richtung beaufschlagt, die den Ausstellhebel nach oben beaufschlagt.

Gemäß einer weiteres Ausführungsform ist eine Schenkelfeder vorgesehen, die den Windabweiserhebel in die ausgestellte Position beaufschlagt. Die Schenkelfeder wird beim Bewegen des Windabweiserhebels von der ausgestellten Position in die Ruheposition vorgespannt. Sie beaufschlagt den Windabweiserhebel in die ausgestellte Position, sobald der Deckel in eine zumindest teilweise geöffnete Stellung verstellt ist.

Weitere Merkmale und Vorteile ergeben sich aus den Unteransprüchen.

Die Erfindung wird nachfolgend anhand mehrerer beispielhaften Ausführungsformen beschrieben, die in den Zeichnungen dargestellt sind. In den Zeichnungen zeigen:
- Figur 1 in einer Draufsicht ein Fahrzeugdach mit einem Schiebedachsystem und mit einem Windabweiser-Mechanismus,
- Figur 2 eine perspektivische, abgeschnittene Ansicht eines Windabweiser-Mechanismus in einem ausgestellten Zustand nach dem Stand der Technik,
- Figur 3 eine perspektivische Ansicht des Windabweiser-Mechanismus von Figur 2, wobei er nicht am Fahrzeugdach montiert ist,
- Figur 4 eine schematische Ansicht eines erfindungsgemäßen Windabweiser-Mechanismus gemäß einer ersten Ausführungsform in einer Ruheposition,
- Figur 5 eine schematische Ansicht des Windabweiser-Mechanismus von Figur 4 in einer ersten Zwischenposition,
- Figur 6 eine schematische Ansicht des Windabweiser-Mechanismus von Figur 4 in einer zweiten Zwischenposition,
- Figur 7 eine schematische Ansicht des Windabweiser-Mechanismus von Figur 4 in einer ausgestellten Position,
- Figur 8 eine schematische Ansicht eines erfindungsgemäßen Windabweiser-Mechanismus gemäß einer zweiten Ausführungsform in einer Ruheposition, und
- Figur 9 eine schematische Ansicht des Windabweiser-Mechanismus von Figur 8 in einer ausgestellten Position.

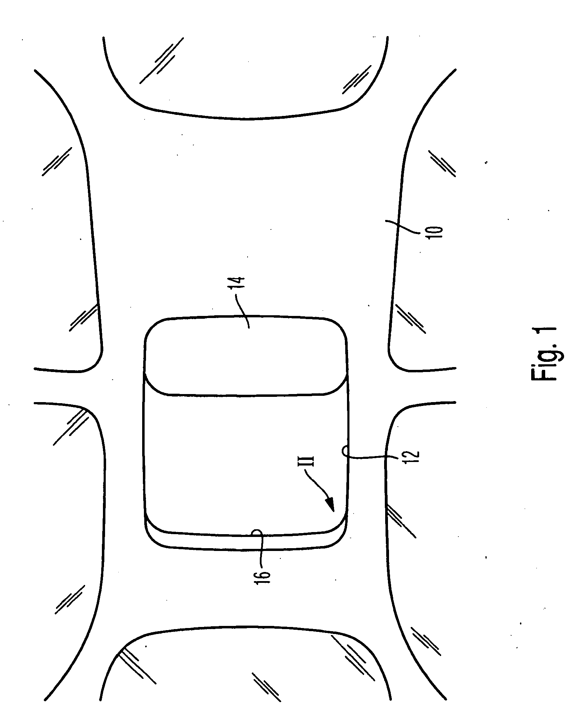

In Figur 1 ist ein Fahrzeugdach 10 gezeigt, das ein Schiebedachsystem mit einer Dachöffnung 12 und einem Deckel 14 aufweist. Der Deckel 14 kann aus einer geschlossenen Stellung, in der er die Dachöffnung 12 verschließt, in eine geöffnete Stellung verschoben werden, die in Figur 1 gezeigt ist und in der die Dachöffnung 12 größtenteils freigegeben ist.

Am bezüglich des Fahrzeugs vorderen Rand der Dachöffnung 12 ist ein Windabweiser-Mechanismus 16 angebracht, der nach außen ausgestellt werden kann, wenn sich der Deckel 14 in einer zumindest teilweise geöffneten Stellung befindet, um die Strömungsverhältnisse zu verbessern und störende Geräusche zu verhindern.

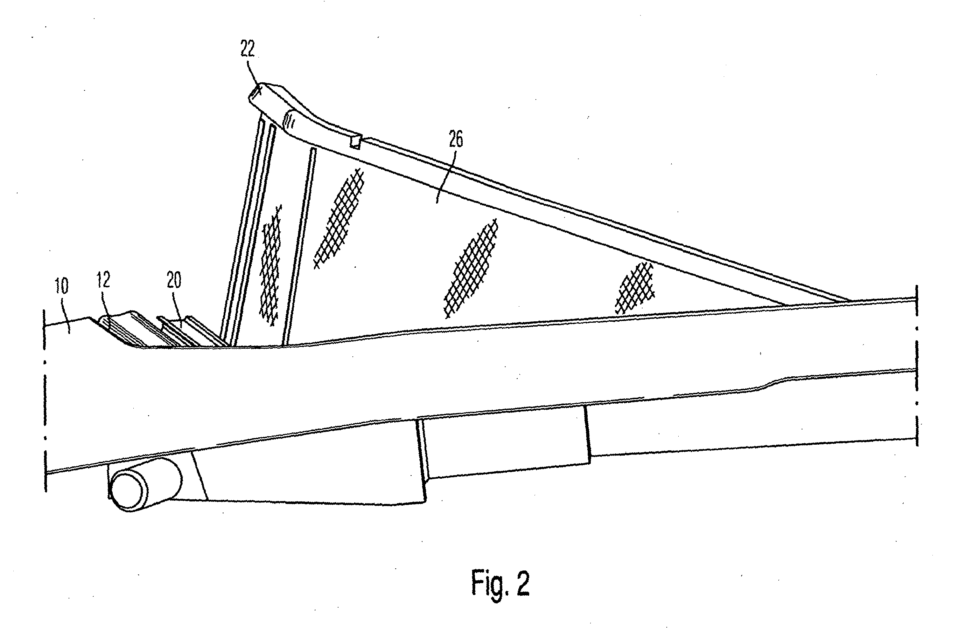

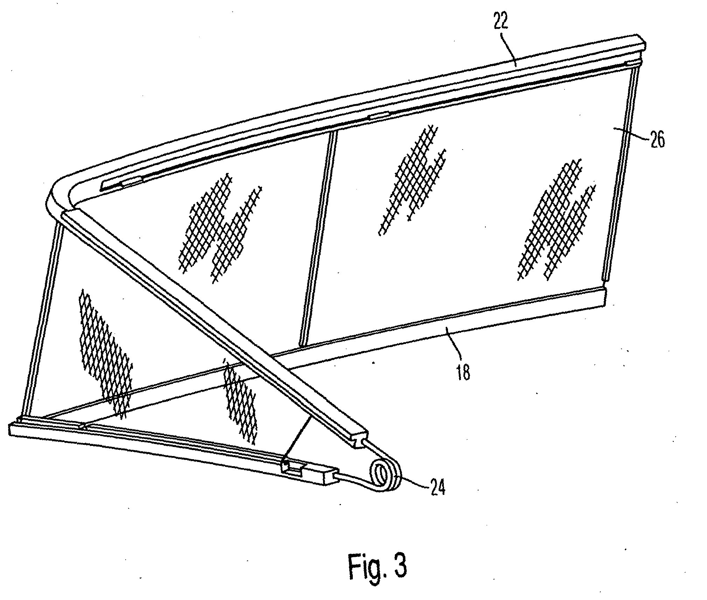

In den Figuren 2 und 3 ist ein Windabweiser-Mechanismus nach dem Stand der Technik gezeigt.

Der Windabweiser besteht aus einem ersten Halteelement 18, das fest am Fahrzeug bzw. einem Montagerahmen 20 angebracht ist, und einem zweiten Halteelement 22, das relativ zum ersten Halteelement 18 verschwenkbar ist. Die beiden Halteelemente 18, 22 sind U-förmig, wobei sich das Mittelteil entlang dem vorderen Rand der Dachöffnung 12 erstreckt und sich die beiden Schenkel jeweils entlang dem vorderen Abschnitt der beiden die Dachöffnung 12 umgebenen Seitenrändern erstrecken. An jedem der Schenkel der Halteelemente 18, 22 ist eine Schenkelfeder 24 angebracht. Die Schenkelfeder 24 dient als Scharnier zwischen dem ersten und dem zweiten Halteelement 18, 22 und beaufschlagt das zweite Halteelement 22 in eine ausgestellte Position, in der sich das zweite Halteelement 22 oberhalb der Außenfläche des Fahrzeugdaches 10 befindet. Diese Position ist in den Figuren 2 und 3 gezeigt. Zwischen dem ersten Halteelement 18 und dem zweiten Halteelement 22 ist ein Windabweiserelement 26 vorgesehen, das aus einem flexiblen und luftdurchlässigen Material besteht, beispielsweise einem Gewebe oder einer luftdurchlässigen Folie aus Kunststoff.

Da das zweite Halteelement 22 in der ausgestellten Position allein durch die Vorspannung der Schenkelfeder 24 gehalten wird, wird das zweite Halteelement 22 ungewollt in Richtung des ersten Halteelements verstellt, sobald die Windkraft die Vorspannung der Schenkelfeder 24 übersteigt.

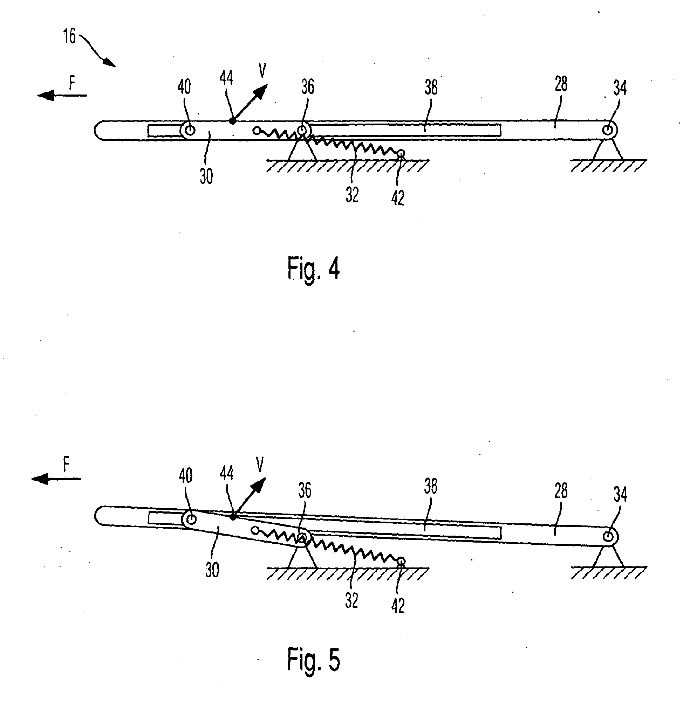

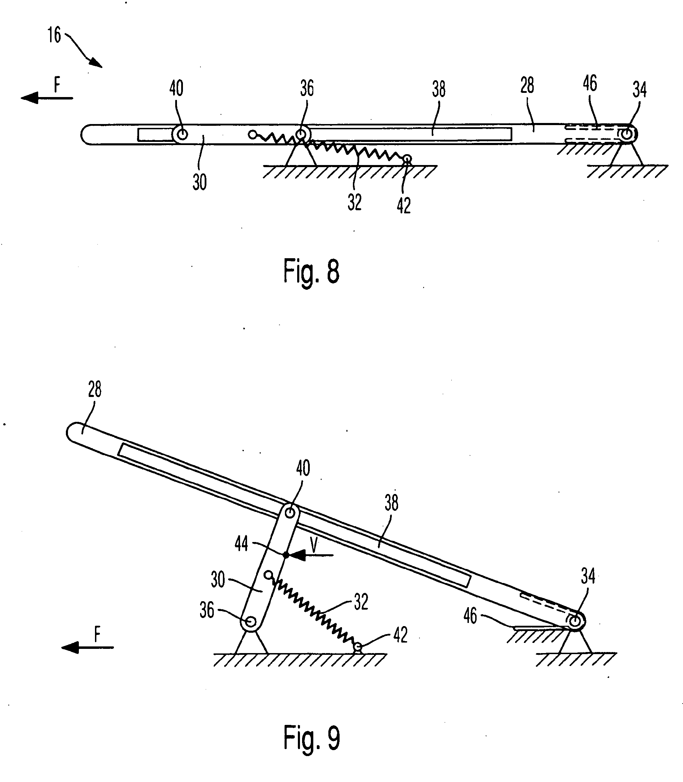

In den Figuren 4 bis 7 ist schematisch ein erfindungsgemäßer Windabweiser-Mechanismus 16 in einer ersten Ausführungsform gezeigt, wohingegen Figuren 8 und 9 den Windabweiser-Mechanismus in einer zweiten Ausführungsform zeigen. Für die aus dem Stand der Technik bekannten Bauteile werden dieselben Bezugszeichen verwendet, und es wird insoweit auf die obigen Erläuterungen verwiesen.

Es ist ein Windabweiserhebel 28 vorgesehen, der im allgemeinen U-förmig ist und sich entlang dem vorderen Rand der Dachöffnung 12 und entlang dem vorderen Abschnitt der beiden die Dachöffnung 12 umgebenden Seitenrändern erstreckt. Der Windabweiserhebel 28 hat eine Führungskulisse 38, in der ein Bolzen 40 eines Ausstellhebels 30 eingreift. Der Windabweiserhebel 28 kann das aus dem Stand der Technik bekannte zweite Halteelement sein, das mit einer Führungskulisse 38 versehen ist.

Am Windabweiserhebel 28 ist ein nicht gezeigtes Windabweiserelement angeordnet, wie es aus dem Stand der Technik bekannt ist.

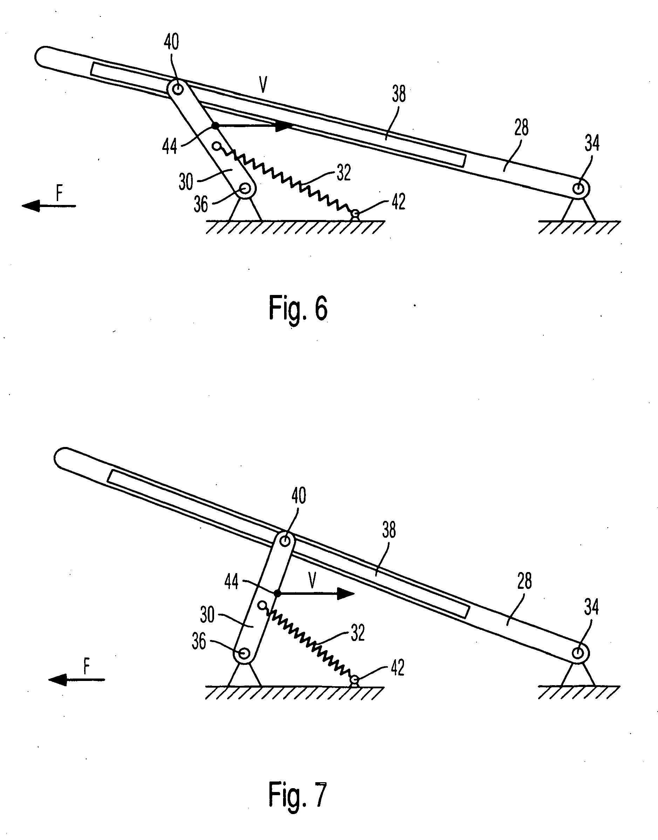

Der Windabweiserhebel 28 kann von dem Ausstellhebel 30 zwischen einer Ruheposition (Figur 4), in der er unterhalb der Außenhaut des Fahrzeugdaches 10 liegt, und einer ausgestellten Position (Figur 7), in der er oberhalb der Außenhaut des Fahrzeugdaches 10 liegt, um ein Lager 34 verschwenkt werden.

Der Ausstellhebel 30 ist an dem dem Bolzen 40 entgegengesetzten Ende schwenkbar (Schwenklager 36) an einer Fahrzeugkarosserie gelagert und kann von einem beweglichen Bauteil des Schiebedachsystems (Angriffspunkt 44) in die ausgestellte Position (Fig. 7) beaufschlagt werden. Das bewegliche Bauteil ist beispielsweise Teil des Schließ- und Öffnungssystems des Deckels 14 oder auch der Deckel 14 selbst.

Eine als Zugfeder ausgebildete Ausstellfeder 32 greift am Ausstellhebel 30 an. Die Ausstellfeder 32 kann den Ausstellhebel 30 in der Ruheposition (Figur 4) und in der ausgestellten Position (Fig. 7) halten. Am entgegengesetzten Ende ist die Ausstellfeder 32 über ein Lager 42 an der Fahrzeugkarosserie gelagert, wobei das Lager 42 sich unterhalb des Schwenklagers 36 des Ausstellhebels 30 befindet.

Figur 4 zeigt den Windabweiser-Mechanismus 16 in der Ruheposition, in der der Ausstellhebel 30 etwa parallel zum Windabweiserhebel 28 ist, wobei der Bolzen 40 in Fahrtrichtung F vor dem Schwenklager 36 des Ausstellhebels 30 liegt. Die Ausstellfeder 32 hält den Ausstellhebel 30 in der Ruheposition, da das Lager 42 der Ausstellfeder 32 unterhalb des Schwenklagers 36 angeordnet ist und die Ausstellfeder 32 den Ausstellhebel 30 nach unten zieht.

In Figur 5 ist der Windabweiser-Mechanismus 16 in einer ersten Zwischenstellung gezeigt, die erreicht wird, wenn das bewegliche Bauteil an dem Ausstellhebel 30 angreift und diesen in Verschieberichtung V verstellt. Dabei wird der Bolzen 40 in der Führungskulisse 38 verstellt, und der Ausstellhebel 30 und damit verbunden der Windabweiserhebel 28 werden etwas ausgestellt. In der ersten Zwischenstellung liegen der Ausstellhebel 30 und die Ausstellfeder 32 auf einer Geraden. Die Ausstellfeder 32 ist in ihrer Totpunktstellung, aus der sie in beide Richtungen, d.h. nach oben oder unten, schnappen kann.

Figur 6 zeigt eine zweite Zwischenstellung, die erreicht wird, wenn das bewegliche Bauteil den Ausstellhebel 30 weiter in Verschieberichtung V verstellt. Der Bolzen 40 wird dabei in der Führungskulisse 38 in Richtung des Lagers 34 bewegt, wodurch der Ausstellhebel 30 und der Windabweiserhebel 28 weiter ausgestellt werden.

In Figur 7 ist die ausgestellte Position gezeigt, die erreicht wird, wenn das bewegliche Bauteil den Ausstellhebel 30 über den Angriffspunkt 44 weiter in Verschieberichtung V verstellt. In der ausgestellten Position steht der Ausstellhebel 30 senkrecht zum Windabweiserhebel 28. Die Ausstellfeder 32 beaufschlagt den Ausstellhebel 30 in diese Stellung und ist in dieser Position am kürzesten. Wenn sich der Windabweiser-Mechanismus 16 in der ausgestellten Position befindet, ist der Deckel 14 des Schiebedachsystems in einer zumindest teilweise geöffneten Stellung.

Die erzeugte Ausstellkraft ist zumindest in der Nähe der ausgestellten Position größer als die Kraft der Ausstellfeder 32, um zu vermeiden, daß der Windabweiserhebel 28 von der Windkraft ungewollt in die Ruheposition verstellt wird. Die auftretenden Windkräfte werden in der ausgestellten Position vollständig über das Lager 34 des Windabweiserhebels 28 und das Schwenklager 36 des Ausstellhebels 30 in die Fahrzeugkarosserie abgeleitet. Die Ausstellfeder 32 dient nicht der Abstützung der Windlasten, sondern wirkt so auf den Ausstellhebel 30, daß dieser die ausgestellte Position beibehält, in der er senkrecht zum Windabweiserhebel 28 steht. Da keine Kräfte über die Ausstellfeder 32 abgestützt werden, wird verhindert, daß der Windabweiserhebel 28 sich unbeabsichtigt verstellt.

Der Windabweiser-Mechanismus 16 wird beim Verschieben des Deckels 14 entgegen der Fahrtrichtung F in die geschlossene Stellung über die Zwischenstellungen in die abgesenkte Position bewegt, wobei das bewegliche Bauteil über den Angriffspunkt 44 an dem Ausstellhebel 30 angreift. Dabei ändert sich die Wirkungslinie der Ausstellfeder 32. Beim Übergang von der ausgestellten Position in die erste Zwischenstellung wird die Ausstellfeder 32 vorgespannt, bis ein Totpunkt (Fig. 5) erreicht ist. Danach hält die Ausstellfeder 32 den Ausstellhebel 30 in der abgesenkten Stellung. Auf Grund der Ausstellfeder 32 und der Änderung ihrer Wirkungslinie wird der Ausstellhebel 30 in der abgesenkten Position und in der ausgestellten Position stabil gehalten.

Die zweite Ausführungsform des Windabweiser-Mechanismus 16 unterscheidet sich von der ersten darin, daß eine Schenkelfeder 46 vorgesehen ist, die am Lager 34 des Windabweiserhebels 28 angreift und den Windabweiserhebel 28 in die ausgestellte Position beaufschlagen kann. Das bewegliche Bauteil muß in dieser Ausführungsform nicht am Ausstellhebel 30 angreifen, um diesen in die ausgestellte Position zu beaufschlagen. Das bewegliche Bauteil greift nur am Ausstellhebel 30 an, um ihn in die Ruheposition zu beaufschlagen. Auf die genaue Funktionsweise wird im folgenden eingegangen.

Der Windabweiser-Mechanismus 16 wird vom geschlossenen Deckel 14 in der Ruheposition (Fig. 8) gehalten, da der Deckel 14 am Windabweiserhebel 28 anliegt und diesen nach unten drückt. In dieser Stellung ist die Schenkelfeder 46 vorgespannt.

Beim Verstellen des Deckels 14 in die geöffnete Stellung (d.h. beim Verfahren des Deckels 14 entgegen der Fahrtrichtung F) wird der Windabweiserhebel 28 von der vorgespannten Schenkelfeder 46 in die ausgestellte Position oder eine Zwischenstellung beaufschlagt, sobald der Deckel 14 nicht mehr am Windabweiserhebel 28 angreift. Die Ausstellfeder 32 beaufschlagt den Ausstellhebel 30 in die ausgestellte Position, sobald sie ihren Totpunkt überschritten hat. Beim Ausstellen wird der Bolzen 40 in der Führungskulisse 38 verstellt, bis der Ausstellhebel 30 senkrecht zum Windabweiserhebel 28 steht.

In der ausgestellten Position dient der Ausstellhebel 30 ausschließlich als Arretierung für den Windabweiserhebel 28. Die Ausstellfeder 32 gewährleistet, daß der Ausstellhebel 30 in seiner Position verbleibt, in der er senkrecht zur Führungskulisse 38 steht.

Der Windabweiser-Mechanismus 16 wird beim Verschieben des Deckels 14 in Fahrtrichtung F in die abgesenkte Position bewegt, wobei das bewegliche Bauteil über den Angriffspunkt 44 an dem Ausstellhebel 30 angreift. Dabei wird der Ausstellhebel 30 aus der Stellung verschoben, in der er senkrecht zum Windabweiserhebel 28 steht, wodurch überhaupt ein Verstellen ermöglicht wird. Das bewegliche Bauteil kann anschließend am Windabweiserhebel 28 angreifen, um den Windabweiser-Mechanismus 16 in die Ruheposition zu bringen. Beim Verstellen des Windabweiserhebels 28 von der ausgestellten Position über die Zwischenstellungen, die im wesentlichen denen der ersten Ausführungsform entsprechen, in die Ruhestellung wird die Schenkelfeder 46 vorgespannt.

In der Ruheposition wird der Windabweiser-Mechanismus 16 von dem beweglichen Bauteil entgegen der Kraft der Schenkelfeder 46 gehalten.

Beide Ausführungsformen gewährleisten einen Windabweiser-Mechanismus, dessen Ausstellhöhe sich in Abhängigkeit des Fahrtwindes nicht ändert, wodurch störende Windgeräusche verhindert werden können.

### Bezugszeichenliste

- 10: Fahrzeugdach
- 12: Dachöffnung
- 14: Deckel
- 16: Windabweiser-Mechanismus
- 18: Halteelement
- 20: Montagerahmen
- 22: Halteelement
- 24: Schenkelfeder
- 26: Windabweiserelement
- 28: Windabweiserhebel
- 30: Ausstellhebel
- 32: Ausstellfeder
- 34: Lager
- 36: Schwenklager
- 38: Führungskulisse
- 40: Bolzen
- 42: Lager
- 44: Angriffspunkt
- 46: Schenkelfeder

## Patentansprüche

1. Windabweiser-Mechanismus für ein Fahrzeug-Schiebedachsystem, mit einem Windabweiserhebel (28) an einem Windabweiserelement, der an einem Fahrzeug angebracht werden kann und der schwenkbar zwischen einer Ruheposition und einer ausgestellten Position ist, einem Ausstellhebel (30), der mit dem Windabweiserhebel (28) gekoppelt ist und diesen zwischen der Ruheposition und der ausgestellten Position verschwenken kann, und einer Ausstellfeder (32), die den Ausstellhebel (30) im wesentlichen so beaufschlagt, dass dieser den Windabweiserhebel (28) in Richtung der ausgestellten Position beaufschlagt, **dadurch gekennzeichnet, dass** der Ausstellhebel (30) so mit dem Windabweiserhebel (28) gekoppelt ist, dass in der ausgestellten Position eine Selbsthemmung derart eintritt, dass der Windabweiserhebel (28) durch die vom Fahrtwind auf ihn einwirkenden Kräfte nicht in Richtung der Ruheposition verstellt werden kann.

2. Windabweiser-Mechanismus nach Anspruch 1, **dadurch gekennzeichnet, dass** der Ausstellhebel (30) mit dem Windabweiserhebel (28) durch eine Führungskulisse (38) gekoppelt ist und dass der Ausstellhebel (30) in etwa senkrecht zur Erstreckungsrichtung der Führungskulisse (38) erstreckt, wenn sich der Windabweiserhebel (28) in der ausgestellten Position befindet.

3. Windabweiser-Mechanismus nach einem der vorhergehenden Ansprüche, **dadurch gekennzeichnet, dass** das Windabweiserelement ein Netz oder ein Gewebe ist.

4. Windabweiser-Mechanismus nach einem der vorhergehenden Ansprüche, **dadurch gekennzeichnet, dass** sich am Ausstellhebel (30) ein Angriffspunkt (44) für ein bewegliches Bauteil des Schiebedachsystems befindet.

5. Windabweiser-Mechanismus nach Anspruch 4, **dadurch gekennzeichnet, dass** die Ausstellfeder (32) relativ zur Schwenkachse des Ausstellhebels (30) so angeordnet ist, dass sie den Ausstellhebel (30) in seiner Ruheposition hält, wenn sich der Windabweiserhebel (28) in der Ruheposition befindet.

6. Windabweiser-Mechanismus nach Anspruch 4 oder 5, **dadurch gekennzeichnet, dass** der Ausstellhebel (30) so mit dem Windabweiserhebel (28) gekoppelt ist, dass zumindest in der Nähe der ausgestellten Position die erzeugte Ausstellkraft größer ist als die Kraft der Ausstellfeder (32).

7. Windabweiser-Mechanismus nach einem der Ansprüche 1 bis 4, **dadurch gekennzeichnet, dass** eine Schenkelfeder (46) vorgesehen ist, die den Windabweiserhebel (28) in die ausgestellte Position beaufschlagt.

## Claims

1. Wind deflector mechanism for a vehicle sliding roof system, having a wind deflector lever (28) on a wind deflector element, which wind deflector lever (28) can be attached to a vehicle and can be pivoted between a rest position and a set-out position, having a setting-out lever (30) which is coupled to the wind deflector lever (28) and which can pivot the latter between the rest position and the set-out position, and having a setting-out spring (32) which loads the setting-out lever (30) substantially such that the latter loads the wind deflector lever (28) in the direction of the set-out position, **characterized in that** the setting-out lever (30) is coupled to the wind deflector lever (28) in such a way that, in the set-out position, a self-locking action is generated such that the wind deflector lever (28) cannot be adjusted in the direction of the rest position by the forces exerted on it by the relative wind.

2. Wind deflector mechanism according to Claim 1, **characterized in that** the setting-out lever (30) is coupled to the wind deflector lever (28) by means of a guide slot (38) and **in that** the setting-out lever (30) extends approximately perpendicular to the direction of extent of the guide slot (38) when the wind deflector lever (28) is in the set-out position.

3. Wind deflector mechanism according to one of the preceding claims, **characterized in that** the wind deflector element is a mesh or a fabric.

4. Wind deflector mechanism according to one of the preceding claims, **characterized in that** an engagement point (44) for a movable component of the sliding roof system is situated on the setting-out lever (30).

5. Wind deflector mechanism according to Claim 4, **characterized in that** the setting-out spring (32) is arranged relative to the pivot axis of the setting-out lever (30) in such a way as to hold the setting-out lever (30) in its rest position when the wind deflector lever (28) is in the rest position.

6. Wind deflector mechanism according to Claim 4 or 5, **characterized in that** the setting-out lever (30) is coupled to the wind deflector lever (28) in such a way that, at least in the vicinity of the set-out position, the setting-out force generated is greater than the force of the setting-out spring (32).

7. Wind deflector mechanism according to one of Claims 1 to 4, **characterized in that** a leg spring (46) is provided which loads the wind deflector lever (28) into the set-out position.

## Revendications

1. Mécanisme de déflecteur de vent pour un système de toit ouvrant d'un véhicule, comprenant un levier de déflecteur de vent (28) sur un élément de déflecteur de vent, qui peut être monté sur un véhicule et qui peut pivoter entre une position de repos et une position sortie, un levier de sortie (30), qui est accouplé au levier de déflecteur de vent (28) et qui peut pivoter celui-ci entre la position de repos et la position sortie, et un ressort de sortie (32) qui sollicite le levier de sortie (30) essentiellement de telle sorte que celui-ci sollicite le levier de déflecteur de vent (28) dans la direction de la position sortie, **caractérisé en ce que** le levier de sortie (30) est accouplé au levier de déflecteur de vent (28) de telle sorte que dans la position sortie, un autoblocage s'établisse de telle sorte que le levier de déflecteur de vent (28) ne puisse pas être déplacé dans la direction de la position de repos par les forces exercées sur lui par le vent relatif.

2. Mécanisme de déflecteur de vent selon la revendication 1, **caractérisé en ce que** le levier de sortie (30) est accouplé au levier de déflecteur de vent (28) par une coulisse de guidage (38) et **en ce que** le levier de sortie (30) s'étend approximativement perpendiculairement à la direction d'étendue de la coulisse de guidage (38) lorsque le levier de déflecteur de vent (28) se trouve dans la position sortie.

3. Mécanisme de déflecteur de vent selon l'une quelconque des revendications précédentes, **caractérisé en ce que** l'élément de déflecteur de vent est un treillis ou une toile.

4. Mécanisme de déflecteur de vent selon l'une quelconque des revendications précédentes, **caractérisé en ce qu'**un point d'engagement (44) pour un composant mobile du système de toit ouvrant se trouve sur le levier de sortie (30).

5. Mécanisme de déflecteur de vent selon la revendication 4, **caractérisé en ce que** le ressort de sortie (32) est disposé par rapport à l'axe de pivotement du levier de sortie (30) de telle sorte qu'il maintienne le levier de sortie (30) dans sa position de repos, lorsque le levier de déflecteur de vent (28) se trouve dans la position de repos.

6. Mécanisme de déflecteur de vent selon la revendication 4 ou 5, **caractérisé en ce que** le levier de sortie (30) est accouplé au levier de déflecteur de vent (28) de telle sorte qu'au moins à proximité de la position sortie, la force de sortie produite soit supérieure à la force du ressort de sortie (32).

7. Mécanisme de déflecteur de vent selon l'une quelconque des revendications 1 à 4, **caractérisé en ce que** l'on prévoit un ressort à branches (46) qui sollicite le levier de déflecteur de vent (28) dans la position sortie.
